# EUROPEAN PATENT SPECIFICATION

(11) **EP 2 798 879 B1**
(45) Date of publication and mention of the grant of the patent: **22.11.2017**
(21) Application number: 11878764.7
(22) Date of filing: 28.12.2011
(51) Int. Cl.: H04W 48/16, H04W 88/02, G06K 9/00, H04L 29/08, G06F 17/30, G06T 11/60, H04L 29/06, H04W 4/00, H04W 4/04, H04W 8/00, H04W 12/02

(54) **ALTERNATE VISUAL PRESENTATIONS**
ALTERNATIVE SICHTBARE DARSTELLUNGEN
PRÉSENTATIONS VISUELLES DIFFÉRENTES

(43) Date of publication of application: 05.11.2014
(73) Proprietor: Intel Corporation, Santa Clara, CA 95054 (US)
(72) Inventor: ANDERSON, Todd, Hillsboro, Oregon 97124 (US); PERLMAN, Radia, Redmond, Washington 98052 (US); MARCH, Wendy, Portland, Oregon 97212 (US)
(74) Representative: Goddar, Heinz J.
(86) International application number: PCT/US2011/067636
(87) International publication number: WO 2013/100985

(56) References cited:
- KR-A- 20110 042 474
- KR-A- 20110 104 379
- KR-A- 20110 136 018
- US-A1- 2008 071 559
- US-A1- 2009 181 653
- US-A1- 2009 300 106
- US-A1- 2011 148 922
- US-B2- 7 463 149
- SHERRY HSI ET AL.: 'RFID Enhances Visitors' Museum Experience at the Explora torium' COMMUNICATIONS OF THE ACM-SPECIAL ISSUE: RFID CACM HOMEPAGE vol. 48, no. IS.9, September 2005, pages 60 - 65, XP055078118

## Description

### TECHNICAL FIELD

Embodiments pertain to Internet technologies. Some embodiments relate to presenting, on a device, alternate visual presentations of real-world objects.

### BACKGROUND

Currently, if a mobile device user encounters text written in a foreign language, the user may have access to a handful of apps that may use the mobile device's camera to capture an image of the text, perform optical character recognition on the text, and then translate the text into the user's language.

However, the optical character recognition is computationally expensive and the automatic translation is usually not error-checked. Furthermore, every device that wants to do a particular translation will repeat the same work as all previous devices that performed the same translation. Finally, the translations are limited to the contents of the original text.

US2009181653 discloses a method and application for mobile phone users providing an ability to discover personal attributes including photo of other individuals in vicinity covered by a short range wireless network, such as Bluetooth or similar signals operating in a wireless free spectrum, such as WiFi.

### BRIEF DESCRIPTION OF THE DRAWINGS

FIG. 1 illustrates an operational environment of a system supporting alternate visual presentations in accordance with some embodiments.
FIG. 2 is a block diagram of an example machine, performing as an alternate visual presentation client in accordance with some embodiments. FIG. 2 is also a block diagram of an example machine, performing as an alternate visual presentation server in accordance with some embodiments.
FIG. 3 illustrates operation of an alternate visual presentation protocol in accordance with some embodiments.
FIG. 4 illustrates the method of a client device presenting alternate visual presentations of an object to a user, in accordance with some embodiments.

### DETAILED DESCRIPTION

The invention concerns methods of claims 1 and 9 respectively and a corresponding machine-readable medium and apparatus according to claims 13 and 14 respectively. The following description and the drawings illustrate specific embodiments to enable those skilled in the art to practice them. Other embodiments may incorporate structural, logical, electrical, process, and other changes. Portions and features of some embodiments may be included in, or substituted for, those of other embodiments.

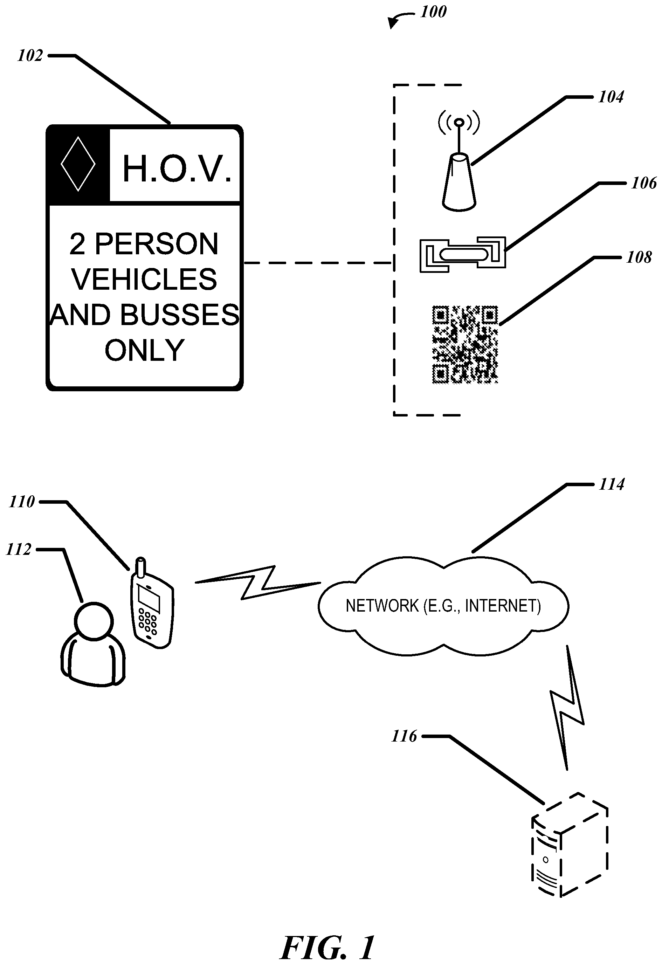

FIG. 1 illustrates the operational environment 100 of a system supporting alternate visual presentations in accordance with some embodiments. Client device 110 may attempt to discover objects 102 in its area that have alternate visual presentations. In some embodiments, objects 102 that have alternate visual presentations may be physical signs, buildings, or even people, and other things that may be present in an environment. In some embodiments, client device 110 may be a smartphone, a tablet computer, a global positioning system (GPS) device, a computer-based dashboard system with display of a vehicle, a head-up display of a vehicle, a set top box, augmented-reality or three-dimensional (3D) glasses known as augmenting/mediating reality glasses, among other devices.

In some embodiments, alternate visual presentations may be static, such as a picture. In other embodiments, alternate visual presentations may be dynamic, such as a video. An example embodiment of an alternate visual presentation may be alternate text of street sign text in another language. Another example embodiment of an alternate visual presentation may be an avatar of a person. Other alternate visual presentations may also or alternatively be included in various embodiments.

In some embodiments, a wireless device 104 may be proximate to objects 102 that have alternate visual presentations. The wireless device 104 may broadcast a message indicating which objects 102 in the area have alternate visual presentations. Client device 110 may discover objects 102 having alternate visual presentations by receiving the broadcast messages from wireless device 104. Such a broadcast message may also, or alternatively, include data about those objects 102. Alternatively, the wireless device 104 may simply respond to discovery requests from client device 110 regarding which objects 102 in the area have alternate visual presentations. Such a response typically includes the data about the objects 102. In some embodiments, the wireless device 104 may communicate with client device 110 using Wi-Fi®, LTE®, WiMax®, or another suitable wireless technology depending on the requirements and environmental factors of the particular embodiment that may affect wireless data communication.

In some embodiments, a radio-frequency identification (RFID) tag 106 may be proximate to one or more objects 102 having alternate visual presentations. In one such embodiment, client device 110 may discover one or more objects 102 by broadcasting an encoded radio signal to interrogate RFID tags 106 in the area. An RFID tag 106 may respond to the encoded radio signal by transmitting an encoded message containing data about and identifying the object(s) 102, with which the RFID tag 106 is associated. Client device 110 may then receive the encoded message response from RFID tag 106, decode the message, and thereby discover the one or more objects 102 associated with RFID tag 106 and having alternate visual presentations.

In some embodiments, a visual tag 108, such as a two-dimensional barcode, may be affixed to, proximate to, or otherwise associated with an object 102 that has alternate visual presentations. Client device 110 may decode the visual tag 108 to obtain a Uniform Resource Identifier (URI). Client device 110 may then submit, via a network interface to a network 114 such as the Internet, a request to the address of an alternate visual presentation server 116 for the object 102. In some embodiments, the address of the alternate visual presentation server 116 is at least partially, if not wholly determined by the URI. The alternate visual presentation server 116 may then reply to client device 110 with a response containing data about object 102, the response transmitted via a network 114 such as the Internet.

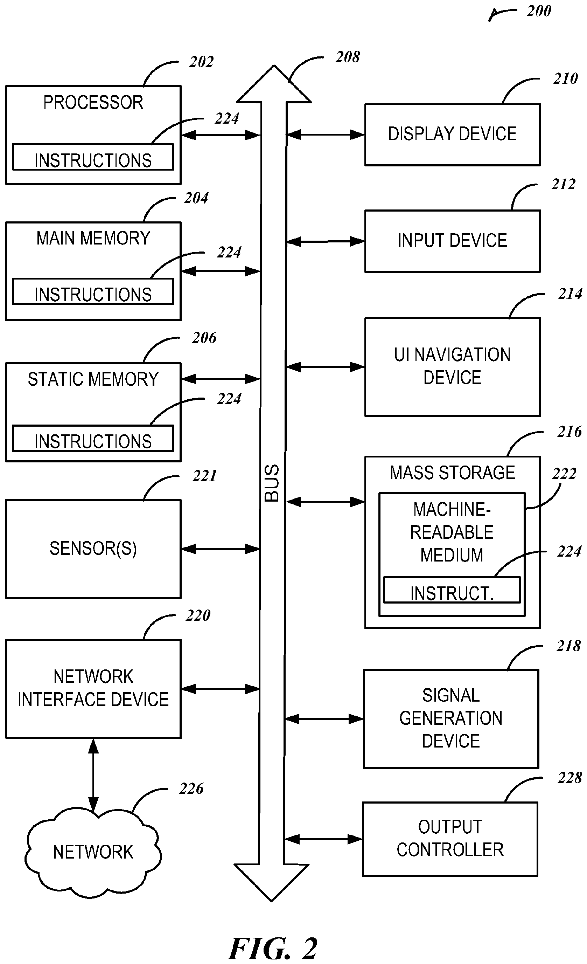

FIG. 2 is a block diagram of an example machine, performing as an alternate visual presentation client in accordance with some embodiments. FIG. 2 is also a block diagram of an example machine, performing as an alternate visual presentation server in accordance with some embodiments. The machine 200 may operate in the capacity of an alternate visual presentation server 116 or a client device 110. The machine 200 may be a personal computer (PC), a tablet PC, a set-top box (STB), a Personal Digital Assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include, or may operate on, logic or a number of components, modules, or mechanisms. Modules are tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside (1) on a non-transitory machine-readable medium or (2) in a transmission signal. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 200 may include a hardware processor 202 (e.g., a central processing unit (CPU), a graphics processing unit (GPU), a hardware processor core, or any combination thereof), a main memory 204 and a static memory 206, some or all of which may communicate with each other via a bus 208. The machine 200 may further include a display unit 210, an alphanumeric input device 212 (e.g., a keyboard), and a user interface (UI) navigation device 211 (e.g., a mouse). In an example, the display unit 210, input device 217 and UI navigation device 914 may be a touch screen display. The machine 200 may additionally include a storage device (e.g., drive unit) 216, a signal generation device 218 (e.g., a speaker), a network interface device 220, and one or more sensors 221, such as a global positioning system (GPS) sensor, compass, accelerometer, or other sensor. The machine 200 may include an output controller 228, such as a serial (e.g., universal serial bus (USB), parallel, or other wired or wireless (e.g., infrared (IR), Wi-Fi) connection to communicate.

The storage device 216 may include a machine-readable medium 222 on which is stored one or more sets of data structures or instructions 224 (e.g., software) embodying or utilized by any one or more of the techniques or functions described herein. The instructions 224 may also reside, completely or at least partially, within the main memory 204, within static memory 206, or within the hardware processor 202 during execution thereof by the machine 200. In an example, one or any combination of the hardware processor 202, the main memory 204, the static memory 206, or the storage device 216 may constitute machine-readable media.

While the machine-readable medium 222 is illustrated as a single medium, the term "machine-readable medium" may include a single medium or multiple media (e.g., a centralized or distributed database, and/or associated caches and servers) that configured to store the one or more instructions 224.

The term "machine-readable medium" may include one or more of virtually any tangible medium that is capable of storing, encoding, or carrying instructions for execution by the machine 200 and that cause the machine 200 to perform any one or more of the techniques of the present disclosure, or that is capable of storing, encoding or carrying data structures used by or associated with such instructions. Machine-readable medium examples may include, but are not limited to, solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 224 may further be transmitted or received over a communications network 226 using a transmission medium via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), peer-to-peer (P2P) networks, among others. In an example, the network interface device 220 may include one or more physical jacks (e.g., Ethernet, coaxial, or phone jacks) or one or more antennas to connect to the communications network 226. In an example, the network interface device 220 may include a plurality of antennas to communicate wirelessly using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 200, and includes digital or analog communications signals or other intangible medium to facilitate communication of such software.

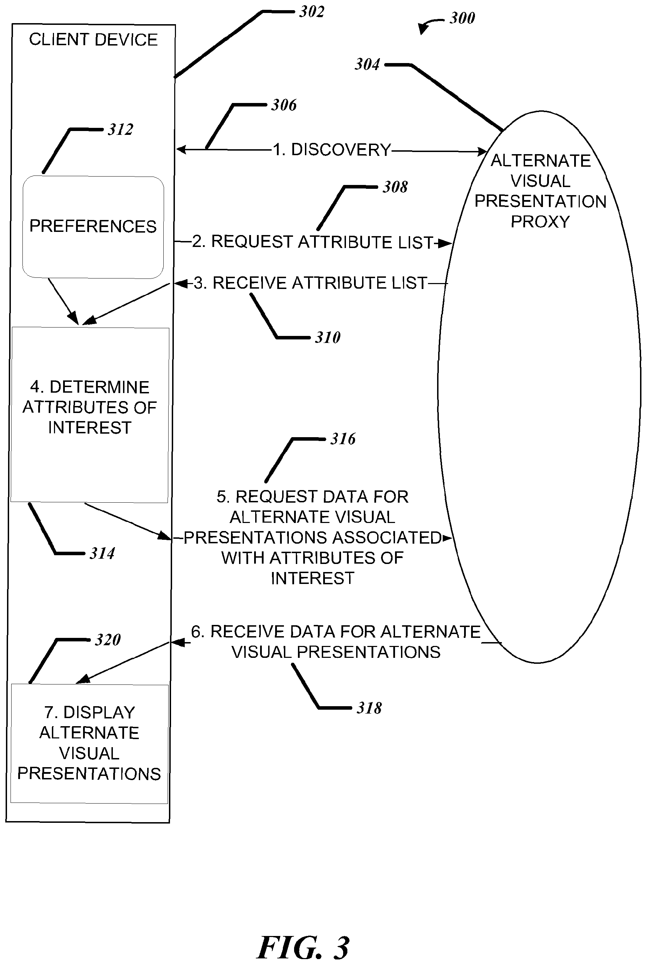

FIG. 3 illustrates the operation 300 of the Alternate Visual Presentations protocol in accordance with some embodiments. Client device 302 may be the same device as client device 110, or may be a computer process running on client device 110. Alternate visual presentation proxy 304 may be the same device as alternate visual presentation server 116, or may be a computer process running on an alternate visual presentation server 116. Client device 302 may discover 306 the presence of objects 102 having alternate visual presentations. Discovery 306 may occur through one or more methods as previously described in the description of FIG 1. Discovery 306 may include choosing, from the set of objects discovered, an object 102 having at least one alternate visual presentation.

In some embodiments, when discovery 306 of objects 102 having alternate visual presentations is complete, the client device 302 may request 308 a list of attributes supported by an object 102 having alternate visual presentations from the alternate visual presentation proxy 304 for the object 102. In some embodiments, the request 308 may contain security credentials. The client device 302 and the alternate visual presentation proxy 304 may use the security credentials to encrypt and decrypt communications between one another. The alternate visual presentation proxy 304 may use the security credentials in determining the list of attributes to send to the client device 302. The alternate visual presentation proxy 304 may then respond by sending the determined list of attributes supported by object 102 to the client device 302. The determined list of attributes supported by the object may be a full set of attributes, a default set of attributes, a set of attributes determined based on the supplied security credentials, or another set of attributes based on the particular embodiment. The client device 302 then receives 310 the attribute list.

Possible attributes received by the client device may include the data identifying a physical location of the object 102, a size of the object 102, plain text associated with the object 102, an image of the object 102, a three dimensional model of the object 102, additional two or three dimensional alternate visual presentations of the object 102, and other attributes depending on the particular embodiment. In some embodiments, language attributes may also be associated with the object 102 and be received by the client device 302. Such language attributes may include data specifying a human language into which the text of object 102 has been translated. In some embodiments, attributes of the object 102 may exist that describe the contents of an alternate visual presentation of the object 102.

Client device 302 may store preferences 312 regarding which alternate visual presentation attributes are of interest to user 112. In some embodiments, upon receiving 310 the attribute list for the object 102 from the alternate visual presentation proxy 304, the client device 302 may use the combination of the attribute list received and the stored preferences 312 to determine automatically 314 the attributes from the received attribute list that are of interest to the user 112. In other embodiments, the user 112 may manually determine 314 and specify, through interaction with the client device 302, the attributes from the received attribute list that are of interest to the user 112.

Upon determining 314 the attributes of interest, the client device 302 may request 316, from the alternate visual presentation proxy 304, data for alternate visual presentations associated with the attributes of interest. The alternate visual presentation proxy 304 may then respond by sending data to the client device 302 for the alternate visual presentations associated with the attributes of interest. Upon receiving 318 the data for alternate visual presentations associated with the attributes of interest, the client device 302 generates and displays 320 the alternate visual presentations on the client device 110 based on the received data. In some embodiments, displaying 320 the alternate visual presentations may include rending at least one image on a view of the environment. The rendered image in some embodiments may include a moving image, which may include an audio track. In other embodiments, the displaying 320 may include playing an audio file associated with the object 102.

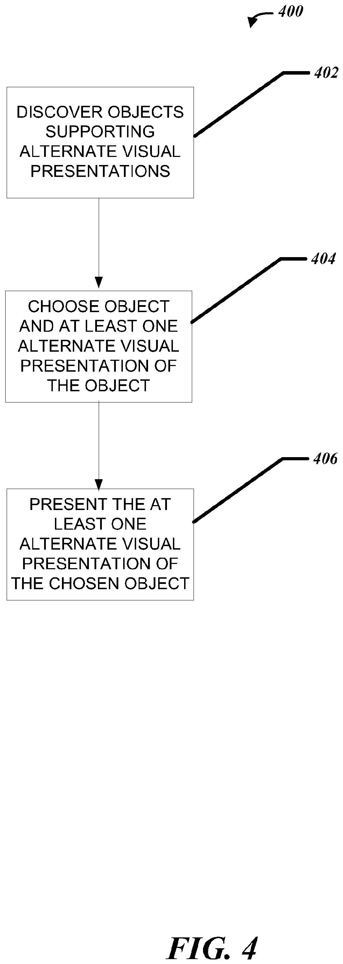

FIG. 4 illustrates the method 400 of a client device 110 presenting alternate visual presentations of an object to a user 112, in accordance with some embodiments. Client device 110 may discover 402 objects 102 having alternate visual presentations through one or more methods as previously described in the descriptions of FIG. 1 and FIG. 3. Client device 110 may then choose 404 an object 102 and at least one alternate visual presentation of the object 102. Finally, client device 110 may present 406 the alternate visual presentation(s) to the user 112.

An additional example embodiment of alternate visual presentations may include a mobile computing device that discovers, via communication with a second computing device, a set of data objects associated with objects present in an environment, each data object in the set supporting at least one alternate presentation of a respective object present in the environment. The mobile computing device may then choose a data object from the set of discovered data objects and a set of alternate presentations associated with the data object. The mobile computing device may then retrieve, via a network interface device, data representing the set of alternate presentations associated with the data object. The mobile computing device may then present the chosen alternate presentations in association with a respective object present in the environment.

Another additional example embodiment of alternate visual presentations may include having the second computing device proximate to a set of objects supporting alternate presentations in the environment, and the discovering may comprise receiving a message by the mobile computing device from the second computing device, the message including data associated with the data objects supporting alternate presentations.

Another example embodiment of alternate visual presentations may include a radio-frequency identification tag as the second computing device.

Another example embodiment of alternate visual presentations may include having the second computing device further configured to periodically broadcast the message.

Another example embodiment of alternate visual presentations may include having the mobile computing device configured to discover by decoding a tag proximate to an object to obtain a Uniform Resource Identifier encoded in the tag. The mobile computing device may then submit a request via a network interface device, the request based on the obtained Uniform Resource Identifier. The mobile computing device may then receive, via the network interface device and in response to the request, data related to each data object of the set of data objects, each data object in the set supporting at least one alternate presentation of a respective object present in the environment.

An additional example embodiment of alternate visual presentations may include having the mobile computing device configured to choose at least one alternate presentation included in the chosen data object by requesting, from the second computing device, a set of supported attributes of the chosen object, each attribute associated with at least one alternate presentation of the chosen object. The mobile computing device may then receive, from the second computing device, the set of supported attributes of the chosen object. The mobile computing device may then determine, based on the set of supported attributes of the chosen object received from the second computing device, a set of alternate presentations of the chosen object that are of interest to the mobile computing device. The mobile computing device may then request, from the second computing device, the set of alternate presentations of the chosen object that are of interest to the mobile computing device. The mobile computing device may then receive the set of alternate presentations of interest from the second computing device.

Another example embodiment of alternate visual presentations may include the mobile computing device sending security credentials as part of its request to the second computing device.

Another example embodiment of alternate visual presentations may include having the mobile computing device configured to present by displaying alternate visual presentations on a display of the mobile computing device.

An additional example embodiment of alternate visual presentations may include displaying alternate visual presentations on augmenting/mediating reality glasses.

Another example embodiment of alternate visual presentations may include having the alternate visual presentation proxy inform a mobile computing device of objects having alternate visual presentations in an environment by transmitting a message from the alternate visual presentation proxy to the mobile computing device. The message may identify a set of objects in an environment, each object in the set supporting at least one alternate presentation.

Another example embodiment of alternate visual presentations may include having the alternate visual presentation proximate to each object identified in the message.

Another example embodiment of alternate visual presentations may include having the message periodically broadcast from the alternate visual presentation proxy.

Another example embodiment of alternate visual presentations may include the alternate visual presentation receiving, from the mobile computing device, a request for a set of supported attributes of the chosen object, each attribute associated with at least one alternate presentation of the chosen object, the request including security credentials. The alternate visual presentation proxy may then send to the mobile computing device a subset of the set of supported attributes of the chosen object, the subset based on security credentials send by the first device. The alternate visual presentation proxy may then receive from the mobile computing device a request for a set of alternate presentations of the chosen object that are of interest to the mobile computing device, the request based on the subset of the set of supported attributes of the chosen object sent to the mobile computing device. The alternate visual presentation proxy may then send the set of alternate presentations of interest to the mobile computing device.

The above detailed description includes references to the accompanying drawings, which form a part of the detailed description. The drawings show, by way of illustration, specific embodiments in which the invention may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain- English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description.

In the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims.

## Claims

1. A method (400) for presenting, on a mobile computing device, at least one presentation in association with a real-world object in an environment, the method comprising:
discovering (402), by a mobile computing device via communication with a second computing device, a set of data objects associated with objects present in an environment, each data object in the set supporting at least one presentation of a respective real-world object present in the environment;
choosing (404) a data object from the set of discovered data objects;
choosing at least one presentation included in the chosen data object including:
requesting, from the second computing device, a set of supported attributes of the chosen data object, each attribute associated with at least one presentation of the chosen data object;
receiving, from the second computing device, the set of supported attributes of the chosen data object;
determining, based on the set of supported attributes of the chosen data object received from the second computing device, a set of presentations of the chosen data object that are of interest to the mobile computing device;
requesting, from the second computing device, the set of presentations of the chosen data object that are of interest to the mobile computing device; and
receiving the set of presentations of interest from the second computing device; and
presenting (406), on the mobile computing device, the chosen presentation of a respective object present in the environment.

2. The method of claim 1, wherein the second computing device is proximate to a set of objects supporting presentations in the environment, and the discovering includes receiving a message from the second computing device, the message including data associated with the data objects supporting presentations.

3. The method of claim 2, wherein the second computing device is a radio-frequency identification tag.

4. The method of claim 2, wherein the message is periodically broadcast from the second computing device.

5. The method of claim 1, wherein discovering includes:
decoding by the mobile computing device a tag that is proximate to, affixed to, or otherwise associated with an object to obtain a Uniform Resource Identifier encoded in the tag;
submitting a request to the second computing device, being a visual representation server, via a network interface of the mobile computing device, the request based on the obtained Uniform Resource Identifier; and
receiving from the visual representation server, via the network interface and in response to the request, data related to each data object of the set of data objects, each data object in the set supporting at least one presentation of a respective non-human object present in the environment.

6. The method of claim 1, wherein requesting from the second computing device includes sending security credentials to the second computing device.

7. The method of claim 1, wherein the presentation is an visual presentation, the presenting including:
displaying visual presentations on a display of the mobile computing device.

8. The method of claim 7, wherein the display of the mobile computing device is a display of augmenting/mediating reality glasses.

9. A method for informing a mobile computing device of real-world objects having presentations in an environment, the method comprising:
transmitting a message to the mobile computing device, the message identifying a set of data objects associated with real-world objects in an environment, each data object in the set supporting at least one presentation of a respective object in the environment receiving, from the mobile computing device, a request for a set of supported attributes of the chosen data object each attribute associated with at least one presentation of the chosen data object; sending to the mobile computing device, the set of supported attributes of a data object chosen from the set of data objects;
receiving, from the mobile computing device, a request for a set of presentations of the chosen data object that are of interest to the mobile computing device, the request based on the set of supported attributes of the chosen data object sent to the mobile computing device; and
sending the set of presentations of interest to the mobile computing device.

10. The method of claim 9, wherein the computing device is proximate to each object identified in the message.

11. The method of claim 10, wherein the message indicating which objects have presentations is periodically broadcast from the computing device.

12. The method of claim 9, wherein:
the request for a set of supported attributes of the chosen data objects including security credentials;
sending to the mobile computing device, the set of supported attributes of the chosen data object including sending a subset of the set of supported attributes of the chosen data object, the subset based on security credentials received from the mobile computing device;
the request for a set of presentations of the chosen data object that are of interest to the mobile computing device is based on the subset of the set of supported attributes of the chosen data object sent to the mobile computing device.

13. A machine-readable medium including code, when executed, to cause a machine to perform the method of any of claims 1 to 12.

14. An apparatus comprising means for performing any of the methods of claims 1 to 12.

## Patentansprüche

1. Verfahren (400) zum Präsentieren auf einer mobilen Datenverarbeitungsvorrichtung mindestens einer Präsentation in Verbindung mit einem Objekt der realen Welt in einer Umgebung, wobei das Verfahren Folgendes umfasst:
Entdecken (402) durch eine mobile Datenverarbeitungsvorrichtung über Kommunikation mit einer zweiten Datenverarbeitungsvorrichtung eines Satzes von Datenobjekten, die mit Objekten verknüpft sind, die in einer Umgebung vorhanden sind, wobei jedes Datenobjekt im Satz mindestens eine Präsentation eines jeweiligen Objekts der realen Welt, das in der Umgebung vorhanden ist, unterstützt;
Auswählen (404) eines Datenobjekts aus dem Satz entdeckter Datenobjekte;
Auswählen mindestens einer Präsentation, die im ausgewählten Datenobjekt beinhaltet ist, einschließlich:
Anfordern eines Satzes unterstützter Attribute des ausgewählten Datenobjekts von der zweiten Datenverarbeitungsvorrichtung, wobei jedes Attribut mit mindestens einer Präsentation des ausgewählten Datenobjekts verknüpft ist;
Empfangen des Satzes unterstützter Attribute des ausgewählten Datenobjekts von der zweiten Datenverarbeitungsvorrichtung;
Bestimmen auf Basis des Satzes unterstützter Attribute des ausgewählten Datenobjekts, das von der zweiten Datenverarbeitungsvorrichtung empfangen wird, eines Satzes von Präsentationen des ausgewählten Datenobjekts, die für die mobile Datenverarbeitungsvorrichtung von Interesse sind;
Anfordern des Satzes von Präsentationen des ausgewählten Datenobjekts, die für die mobile Datenverarbeitungsvorrichtung von Interesse sind, von der zweiten Datenverarbeitungsvorrichtung; und
Empfangen des Satzes von Präsentationen von Interesse von der zweiten Datenverarbeitungsvorrichtung und
Präsentieren (406) der ausgewählten Präsentation eines jeweiligen Objekts, das in der Umgebung vorhanden ist, auf der mobilen Datenverarbeitungsvorrichtung.

2. Verfahren nach Anspruch 1, wobei sich die zweite Datenverarbeitungsvorrichtung in der Nähe eines Satzes von Objekten befindet, die Präsentationen in der Umgebung unterstützen, und das Entdecken das Empfangen einer Nachricht von der zweiten Datenverarbeitungsvorrichtung beinhaltet, wobei die Nachricht Daten beinhaltet, die mit den Datenobjekten verknüpft sind, die Präsentationen unterstützen.

3. Verfahren nach Anspruch 2, wobei die zweite Datenverarbeitungsvorrichtung ein Funkfrequenzidentifikationstag ist.

4. Verfahren nach Anspruch 2, wobei die Nachricht von der zweiten Datenverarbeitungsvorrichtung regelmäßig rundgesendet wird.

5. Verfahren nach Anspruch 1, wobei das Entdecken Folgendes beinhaltet:
Decodieren durch die mobile Datenverarbeitungsvorrichtung eines Tags, das sich in der Nähe eines Objekts befindet, daran befestigt oder auf sonstige Weise damit verknüpft ist, um eine einheitliche Ressourcenkennung (Uniform Resource Identifier) zu erhalten, die im Tag codiert ist;
Übermitteln einer Anforderung an die zweite Datenverarbeitungsvorrichtung, bei der es sich um einen visuellen Repräsentationsserver handelt, über eine Netzwerkschnittstelle der mobilen Datenverarbeitungsvorrichtung, wobei die Anforderung auf der erhaltenen einheitlichen Ressourcenkennung basiert; und
Empfangen vom visuellen Repräsentationsserver über die Netzwerkschnittstelle und in Reaktion auf die Anforderung von Daten, die sich auf jedes Datenobjekt des Satzes von Datenobjekten beziehen, wobei jedes Datenobjekt im Satz mindestens eine Präsentation eines jeweiligen nicht menschlichen Objekts unterstützt, das in der Umgebung vorhanden ist.

6. Verfahren nach Anspruch 1, wobei das Anfordern von der zweiten Datenverarbeitungsvorrichtung das Senden von Sicherheitsanmeldedaten an die zweite Datenverarbeitungsvorrichtung beinhaltet.

7. Verfahren nach Anspruch 1, wobei die Präsentation eine visuelle Präsentation ist, - wobei die Präsentation Folgendes beinhaltet:
Anzeigen visueller Präsentationen auf einer Anzeige der mobilen Datenverarbeitungsvorrichtung.

8. Verfahren nach Anspruch 7, wobei die Anzeige der mobilen Datenverarbeitungsvorrichtung eine Anzeige einer erweiternden/vermittelnden Realitätsbrille ist.

9. Verfahren zum Informieren einer mobilen Datenverarbeitungsvorrichtung über Objekte der realen Welt, die Präsentationen in einer Umgebung aufweisen, wobei das Verfahren Folgendes umfasst:
Übertragen einer Nachricht an die mobile Datenverarbeitungsvorrichtung, wobei die Nachricht einen Satz von Datenobjekten identifiziert, die mit Objekten der realen Welt verknüpft sind, die in einer Umgebung vorhanden sind, wobei jedes Datenobjekt im Satz mindestens eine Präsentation eines jeweiligen Objekts in der Umgebung unterstützt;
Empfangen von der mobilen Datenverarbeitungsvorrichtung einer Anforderung eines Satzes unterstützter Attribute des ausgewählten Datenobjekts, wobei jedes Attribut mit mindestens einer Präsentation des ausgewählten Datenobjekts verknüpft ist;
Senden des Satzes unterstützter Attribute eines Datenobjekts, das aus dem Satz von Datenobjekten ausgewählt wurde, an die mobile Datenverarbeitungsvorrichtung;
Empfangen von der mobilen Datenverarbeitungsvorrichtung einer Anforderung eines Satzes von Präsentationen des ausgewählten Datenobjekts, die für die mobile Datenverarbeitungsvorrichtung von Interesse sind, wobei die Anforderung auf dem Satz unterstützter Attribute des ausgewählten Datenobjekts basiert, das an die mobile Datenverarbeitungsvorrichtung gesendet wurde; und
Senden des Satzes von Präsentationen, die für die mobile Datenverarbeitungsvorrichtung von Interesse sind.

10. Verfahren nach Anspruch 9, wobei die Datenverarbeitungsvorrichtung sich in der Nähe jedes Objekts befindet, das in der Nachricht identifiziert ist.

11. Verfahren nach Anspruch 10, wobei die Nachricht, die anzeigt, welche Objekte Präsentationen aufweisen, von der Datenverarbeitungsvorrichtung regelmäßig rundgesendet wird.

12. Verfahren nach Anspruch 9, wobei:
die Anforderung eines Satzes unterstützter Attribute des ausgewählten Datenobjekts Sicherheitsanmeldedaten beinhaltet;
das Senden des Satzes unterstützter Attribute des ausgewählten Datenobjekts an die mobile Datenverarbeitungsvorrichtung das Senden eines Untersatzes des Satzes unterstützter Attribute des ausgewählten Datenobjekts beinhaltet, wobei der Untersatz auf Sicherheitsanmeldedaten basiert, die von der mobilen Datenverarbeitungsvorrichtung empfangen werden;
die Anforderung eines Satzes von Präsentationen des ausgewählten Datenobjekts, die für die mobile Datenverarbeitungsvorrichtung von Interesse sind, auf dem Untersatz des Satzes unterstützter Attribute des ausgewählten Datenobjekts basiert, das an die mobile Datenverarbeitungsvorrichtung gesendet wurde.

13. Maschinenlesbares Medium einschließlich Code, der, wenn er ausgeführt wird, bewirkt, dass eine Maschine das Verfahren nach einem der Ansprüche 1 bis 12 durchführt.

14. Vorrichtung, die Mittel zum Durchführen jedes der Verfahren nach den Ansprüchen 1 bis 12 umfasst.

## Revendications

1. Procédé (400) pour présenter, sur un dispositif informatique mobile, au moins une présentation en association avec un objet du monde réel dans un environnement, lequel procédé consiste à :
découvrir (402), par un dispositif informatique mobile via une communication avec un second dispositif informatique, un ensemble d'objets de données associés à des objets présents dans un environnement, chaque objet de données dans l'ensemble supportant au moins une présentation d'un objet du monde réel respectif présent dans l'environnement ;
choisir (404) un objet de données dans l'ensemble d'objets de données découverts ;
choisir au moins une représentation comprise dans l'objet de données choisi consistant à :
demander, depuis le second dispositif informatique, un ensemble d'attributs supportés de l'objet de données choisi, chaque attribut étant associé à au moins une présentation de l'objet de données choisi ;
recevoir, depuis le second dispositif informatique, l'ensemble d'attributs supportés de l'objet de données choisi ;
déterminer, en fonction de l'ensemble d'attributs supportés de l'objet de données choisi du second dispositif informatique, un ensemble de présentations de l'objet de données choisi présentant un intérêt pour le dispositif informatique mobile ;
demander, depuis le second dispositif informatique, l'ensemble de présentations de l'objet de données choisi présentant un intérêt pour le dispositif informatique mobile ;
et recevoir l'ensemble de présentations présentant un intérêt depuis le second dispositif informatique ; et présenter (406), sur le dispositif informatique mobile, la présentation choisie d'un objet respectif présent dans l'environnement.

2. Procédé selon la revendication 1, dans lequel le second dispositif informatique est proche d'un ensemble d'objets supportant des présentations dans l'environnement, et la découverte consiste à recevoir un message du second dispositif informatique, le message comprenant des données associées aux objets de données supportant des présentations.

3. Procédé selon la revendication 2, dans lequel le second dispositif informatique est une étiquette d'identification radiofréquence.

4. Procédé selon la revendication 2, dans lequel le message est périodiquement diffusé depuis le second dispositif informatique.

5. Procédé selon la revendication 1, dans lequel la découverte consiste à :
décoder par le dispositif informatique mobile une étiquette qui est proche de, fixée à, ou autrement associée à, un objet pour obtenir un identifiant de ressource uniforme codé dans l'étiquette ;
soumettre une demande au second dispositif informatique, qui est un serveur de représentation visuelle, via une interface réseau du dispositif informatique mobile, la demande étant basée sur l'identifiant de ressource uniforme obtenu ; et
recevoir du serveur de représentation visuelle, via l'interface réseau et en réponse à la demande, des données concernant chaque objet de données de l'ensemble d'objets de données, chaque objet de données dans l'ensemble supportant au moins une présentation d'un objet non humain respectif présent dans l'environnement.

6. Procédé selon la revendication 1, dans lequel la demande du second dispositif informatique consiste à envoyer des certificats de sécurité au second dispositif informatique.

7. Procédé selon la revendication 1, dans lequel la présentation est une présentation visuelle, la présentation consistant à afficher des présentations visuelles sur un affichage du dispositif informatique mobile.

8. Procédé selon la revendication 7, dans lequel l'affichage du dispositif informatique mobile est un affichage de lunettes d'augmentation/médiation.

9. Procédé pour informer un dispositif informatique mobile d'objets du monde réel ayant des présentations dans un environnement, lequel procédé consiste à :
transmettre un message au dispositif informatique mobile, le message identifiant un ensemble d'objets de données associés à des objets du monde réel dans un environnement, chaque objet de données dans l'ensemble supportant au moins une présentation d'un objet respectif dans l'environnement ;
recevoir du dispositif informatique mobile une demande pour un ensemble d'attributs supportés de l'objet de données choisi, chaque attribut étant associé à au moins une présentation de l'objet de données choisi ;
envoyer au dispositif informatique mobile l'ensemble d'attributs supportés d'un objet de données choisi dans l'ensemble d'objets de données ;
recevoir du dispositif informatique mobile une demande pour un ensemble de présentations de l'objet de données choisi présentant un intérêt pour le dispositif informatique mobile, la demande étant basée sur l'ensemble d'attributs supportés de l'objet de données choisi envoyé au dispositif informatique mobile ; et
envoyer l'ensemble de présentations présentant un intérêt au dispositif informatique mobile.

10. Procédé selon la revendication 9, dans lequel le dispositif informatique est proche de chaque objet identifié dans le message.

11. Procédé selon la revendication 10, dans lequel le message indiquant quels objets ont des présentations est périodiquement diffusé depuis le dispositif informatique.

12. Procédé selon la revendication 9, dans lequel :
la demande d'un ensemble d'attributs supportés de l'objet de données choisi comprend des certificats de sécurité ;
l'envoi au dispositif informatique mobile de l'ensemble d'attributs supportés de l'objet de données choisi consiste à envoyer un sous-ensemble de l'ensemble d'attributs supportés de l'objet de données choisi, le sous-ensemble étant basé sur les certificats de sécurité reçus du dispositif informatique mobile ;
la demande pour un ensemble de présentations de l'objet de données choisi présentant un intérêt pour le dispositif informatique mobile est basée sur le sous-ensemble de l'ensemble d'attributs supportés de l'objet de données choisi envoyé au dispositif informatique mobile.

13. Support lisible par machine comprenant un code qui, lorsqu'il est exécuté, fait qu'une machine va effectuer le procédé selon l'une quelconque des revendications 1 à 12.

14. Appareil comprenant un moyen pour effectuer l'un quelconque des procédés selon les revendications 1 à 12.
